# EUROPEAN PATENT SPECIFICATION

(11) **EP 1 348 647 B1**
(45) Date of publication and mention of the grant of the patent: **15.12.2004**
(21) Application number: 03003208.0
(22) Date of filing: 20.02.2003
(51) Int. Cl.: B65G 1/04

(54) **Device for grouping and moving metallic profiled elements, particularly steel rods**
Vorrichtung zur Gruppierung und Transport von Profilteilen aus Metall, insbesonder Stabstahl
Dispositif pour le groupement et le transport de profils métalliques, en particulier de barres

(30) Priority: 29.03.2002 IT MI20020669
(43) Date of publication of application: 01.10.2003
(73) Proprietor: Schnell S.p.A., 61032 Fano (Pesaro) (IT)
(72) Inventor: Rupoli, Simone, 61032 Fano (Prov. of Pesaro-Urbino) (IT)
(74) Representative: Modiano, Guido, Dr.-Ing.

(56) References cited:
- DE-U- 20 017 694
- GB-A- 2 116 955
- US-A- 4 000 818
- US-A- 4 195 737
- US-A- 4 993 905
- US-A- 5 626 454

## Description

The present invention relates to a device for grouping and moving metallic profiled elements, particularly for steel rods for manufacturing reinforcement frames for concrete or the like (e.g. see: document US-A-4 000 818).

Cropping tables for cropping metallic profiled elements into segments of preset length, particularly for cropping steel rods for manufacturing reinforcement frames for concrete or the like, are generally equipped with devices which, after cropping, group the cropped profiled elements according to various requirements, such as for example according to the client, order, beam to be reinforced or element in general, and move the grouped profiled elements so as to feed them to other machines or simply so as to unload them from the machine.

These devices are generally constituted by a plurality of grouping and movement channels, which are arranged longitudinally side by side and are delimited by lateral containment elements and by a bottom that forms a support for the profiled elements to be grouped and moved.

On the bottom of these channels there are rollers, which are orientated so that their axes lie transversely to the longitudinal extension of the channels and can be rotationally actuated about their own axes so as to produce the advancement of the profiled elements along the channels. In practice, the set of profiled elements that is grouped in a channel rests on the rollers located on the bottom of said channel, and the actuation of the rollers produces the advancement of the set of profiled elements along the channel.

The rollers placed in a same channel are generally actuated by means of a same motor and are mutually connected by means of a transmission that is usually of the chain type.

In known types of device, in order to be able to move the profiled elements grouped in one channel independently of the profiled elements grouped in another channel, the rollers of each channel can be actuated independently of the rollers of the other channels: this entails the need to provide a motor for each channel of the device.

In cropping tables, the channels are delimited in an upward region by closure elements, which form an inclined rolling surface for the profiled elements, and said closure elements can be actuated, for each channel, independently of the closure elements of the other channels, so as to allow the profiled elements to fall into one channel rather than into another, thus allowing a grouping of the profiled elements that is diversified and selective for each channel.

Similar devices with multiple channels arranged side by side are used in buffer units, in storage systems with roller conveyors, in transfer roller conveyors, and in other devices.

In devices of this kind there is often the need to be able to increase the number of channels so as to have greater possibilities of diversifying the grouping and movement of the profiled elements. This requirement clashes with cost problems, since an increase in the number of channels would increase the number of motors and of the corresponding transmission elements required to drive the rollers.

The problem of avoiding an increase in the number of motors required for correct operation of the device is not easy to solve.

The aim of the present invention is to solve this problem, by providing a device for grouping and moving metallic profiled elements, particularly for steel rods for producing reinforcement frames for concrete or the like, which for an equal number of grouping and movement channels and for equal dimensions can have lower costs, for the actuation means, than known types of devices.

Within this aim, an object of the invention is to provide a device that allows to manage individually the various grouping and movement channels while having a number of actuation motors and corresponding transmission elements that is smaller than the number of grouping and movement channels.

Another object of the invention is to provide a device that by reducing the number of actuation motors required also reduces the overall costs of the devices for controlling and actuating said motors.

Another object of the invention is to provide a device that facilitates the operations for applying labels for identifying the sets of profiled elements grouped in the various channels.

This aim and these and other objects that will become better apparent hereinafter are achieved by a device for grouping and moving metallic profiled elements, particularly for steel rods for producing reinforcement frames for concrete or the like, comprising at least two grouping and movement channels, which are elongated longitudinally, are arranged horizontally or inclined with respect to the horizontal, and are flanked and delimited by lateral containment elements and by a bottom that forms a support for the profiled elements to be grouped and moved, means being provided in said channels for moving the profiled elements along a movement direction that is substantially parallel to the longitudinal extension of said channels, characterized in that said movement means are common to at least two of said channels, overriding means being provided for at least one of said at least two channels, said means being activatable on command in order to eliminate the effect of said movement means on the profiled elements arranged in said at least one of said channels.

Further characteristics and advantages of the invention will become better apparent from the description of a preferred but not exclusive embodiment of the device according to the invention, illustrated only by way of non-limitative example in the accompanying drawings, wherein:

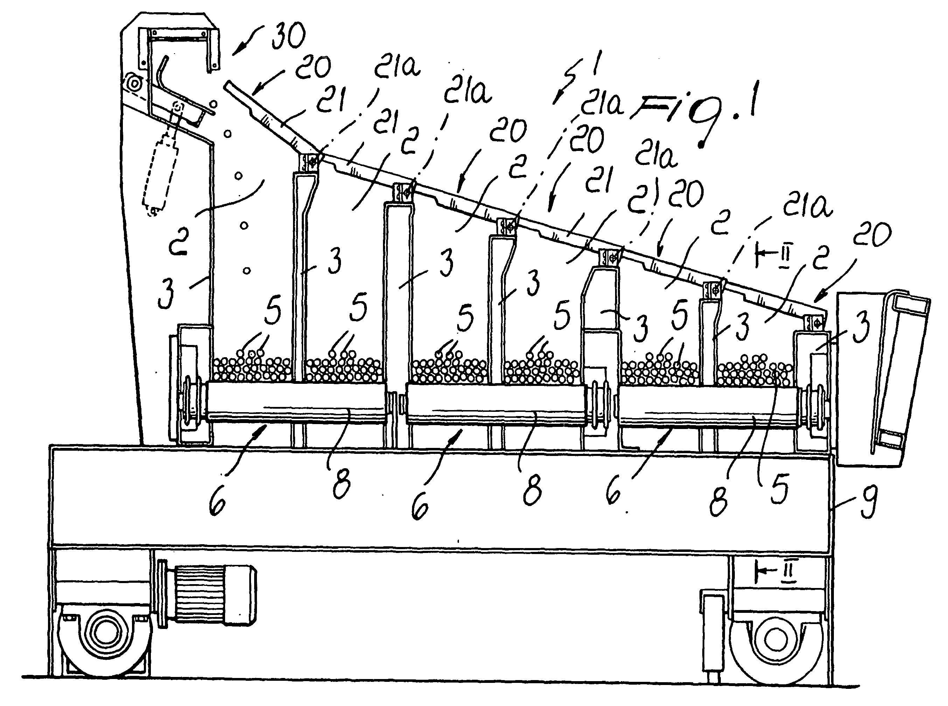

Figure 1 is a sectional schematic view of the device according to the invention applied to a cropping table, taken along a plane that is perpendicular to the movement direction and with the overriding means deactivated;

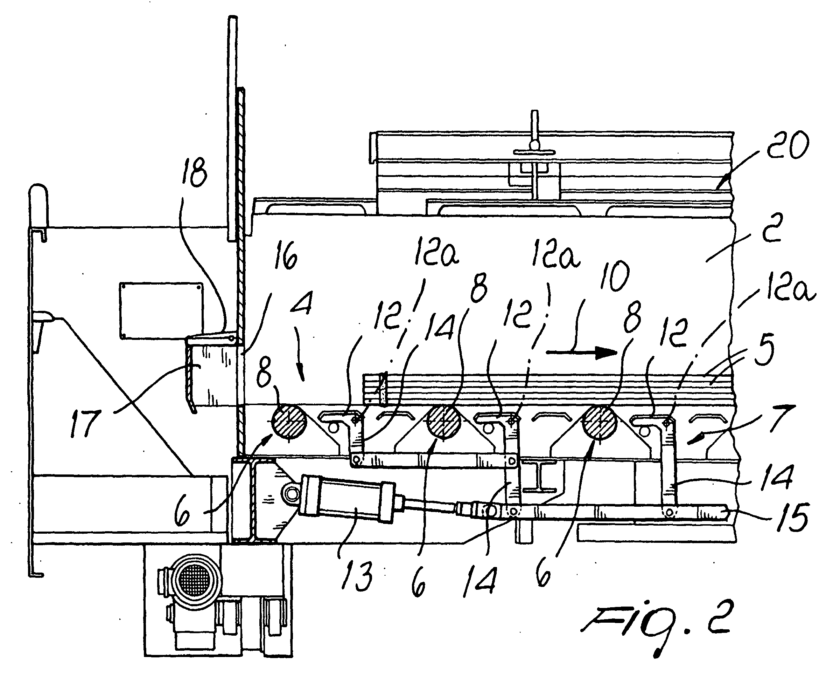

Figure 2 is an enlarged-scale sectional view of Figure 1, taken along the line II-II;

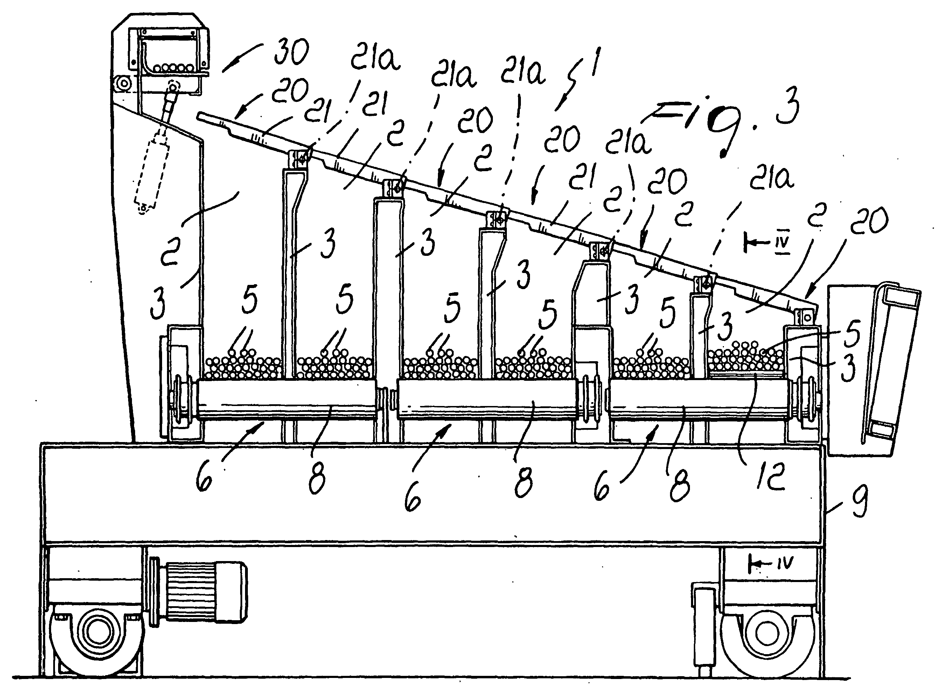

Figure 3 is a view, similar to Figure 1, of the device according to the invention, with the means for overriding a channel activated;

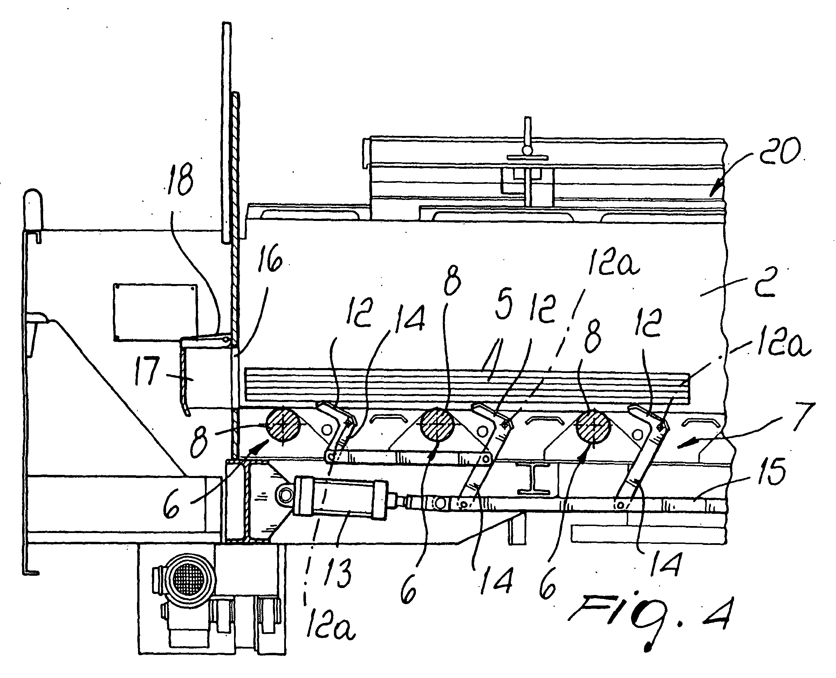

Figure 4 is an enlarged-scale sectional view of Figure 3, taken along the line IV-IV;

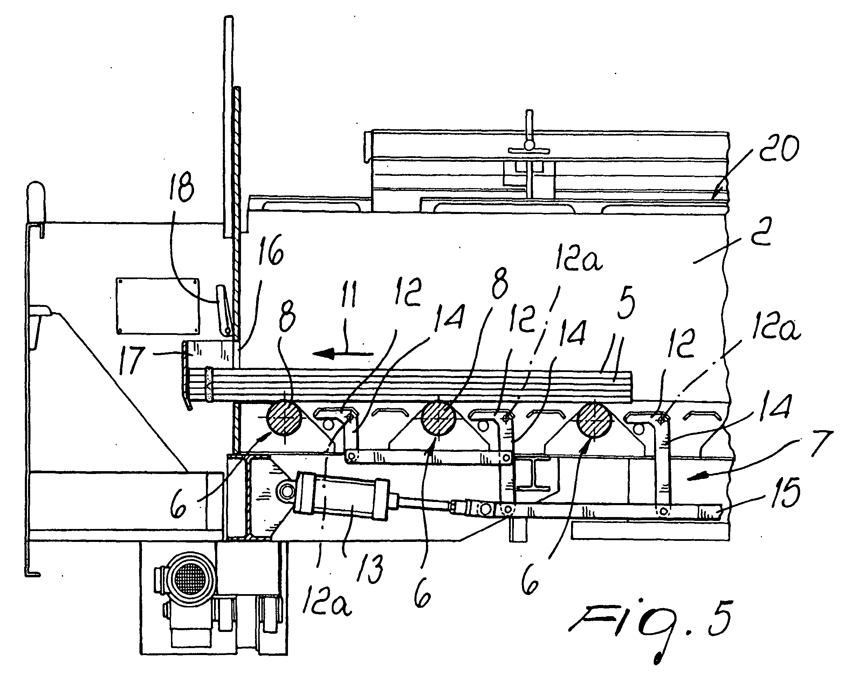

Figure 5 is a sectional view, similar to Figure 4, of a particular operating condition of the device according to the invention.

With reference to the figures, the device according to the invention, generally designated by the reference numeral 1, comprises at least two grouping and movement channels 2 which are elongated longitudinally and are arranged horizontally or inclined with respect to the horizontal. Said channels 2 are flanked and delimited by lateral containment elements 3 and by a bottom 4 that forms a support for the profiled elements 5 to be grouped and moved.

In the illustrated embodiment, the device is provided with six channels 2, but the number of channels can vary according to the requirements.

Means 6 for moving the profiled elements 5 along a movement direction that is substantially parallel to the longitudinal extension of the channels 2 are arranged in the channels 2.

According to the invention, the movement means 6 are shared by at least two of the channels 2 and for at least one of the at least two channels 2 that share the movement means 6 there are overriding means 7, which can be actuated on command in order to cancel the effect of the movement means 6 on the profiled elements 5 arranged in said channel.

The movement means 6 are conveniently constituted by rollers 8, which are arranged so that their axes lie transversely to the longitudinal extension of the channels 2 and are arranged on the bottom 4 of the channels 2 so as to form, as a whole, a supporting surface for the profiled elements 5. The rollers 8 are supported, so that they can rotate about their respective axes, by a supporting structure 9, and can be rotationally actuated about their respective axes in order to move, in one direction (indicated by the arrow 10) and/or in the opposite direction (indicated by the arrow 11), the profiled elements 5 along the movement direction.

The rollers 8 can be actuated in a per se known manner, for example by means of electric motors connected to the rollers 8 by way of a chain drive. In particular, in the device according to the invention there can be an actuation motor for each row of rollers 8 that affects a single channel or multiple channels 2, and the connection between the rollers 8 of a same row of rollers 8 can be performed, in a per se known manner, by means of chains.

The overriding means 7 comprise lifting means for the profiled elements 5, which are arranged in at least one of the channels 2. Said lifting means can be activated in order to prevent the profiled elements 5 from resting on the rollers 8 located on the bottom 4 of the corresponding channel 2, and can be deactivated in order to allow the profiled elements 5 to rest on the rollers 8 located on the bottom 4 of the corresponding channel 2.

Preferably, in order to manage the movement of the profiled elements 5 individually for each channel 2, in each channel 2 there are lifting means that can be activated independently for each channel.

Said lifting means preferably comprise curved panels 12, which are interposed between the rollers 8 along the direction of the movement of the profiled elements 5 in the various channels 2. The curved panels 12 can move on command from a deactivation position, in which they are arranged below the supporting surface for the profiled elements 5 provided with rollers 8 in order to allow the resting of the profiled elements 5 on the rollers 8, to an activation position, in which at least one of their portions protrudes upward from said surface in order to prevent the resting of the profiled elements 5 on the rollers 8, and vice versa.

In the illustrated embodiment, the curved panels 12 are pivoted, proximate to one of their sides, to the supporting structure 9 about an axis 12a that is parallel to the axes of the rollers 8, so as to act, when they are rotated in one direction about said axis 12a, with the opposite side on the profiled elements 5 arranged in the channels 2, lifting them above the rollers 8.

Conveniently, the curved panels 12 arranged in a same channel 2 are connected to each other and to a same actuator 13, for example a fluid-actuated cylinder, which can be actuated in order to pass them from the deactivation position to the activation position, or vice versa.

In the illustrated embodiment, each one of the curved panels 12 is provided with an arm 14 that protrudes downwardly and is pivoted to a rod 15 that mutually connects the various curved panels 12 of a same channel 2 and is in turn connected to a fluid-operated cylinder 13 for the actuation of the curved panels 12.

The channels 2 have, at one of their longitudinal ends, an exit opening, not shown for the sake of simplicity, through which the profiled elements 5 are removed after grouping them.

Conveniently, the channels 2 have, at their longitudinal end that lies opposite the end provided with the exit opening, an opening 16 that is connected to a holding compartment 17, which can be accessed from outside by an operator.

The compartment 17 is closed in an upward region by a protective cover 18, which can be opened in order to access the compartment 17, and safety means are provided which allow the actuation of the movement means 6, constituted by the rollers 8, only when the protective cover 18 is in the correct closure position.

The safety means can be constituted by a sensor or a circuit breaker that is capable of being affected by the opening of the cover 18 and of preventing or interrupting, by way of a suitable connection, the actuation of the motors connected to the rollers 8 when the protective cover 18 is opened.

Each channel 2 is delimited in an upward region by a closure element 20; said closure elements can be opened individually in order to allow the entry of the profiled elements 5 into the corresponding channel 2.

The closure element 20 for each channel 2 can be constituted, in a per se known manner, by rods 21, which are pivoted by means of one of their ends to the supporting structure 9 about a pivoting axis 21a, which is parallel to the longitudinal extension of the channels 2. The rods 21 arranged so as to close a same channel 2 are mutually connected, so that they can be actuated as a group for a same channel independently of the rods 21 arranged so as to close the other channels 2. Said rods 21 can rotate on command about their pivoting axis 21a in order to open the corresponding channel 2, allowing the entry of the profiled elements 5 into said channel 2, or so as to close the corresponding channel 2 in order to prevent the entry of the profiled elements 5 in said channel 2.

The rods 21 of the various channels 2 are arranged, in a per se known manner, so as to form an inclined rolling surface for the profiled elements 5, which by rolling can reach the entry opening of the various channels 2.

In the illustrated embodiment, the device according to the invention is shown in association with a cropping table 30, but according to the requirements it can be used in other kinds of machine or devices of the type mentioned initially.

Operation of the device according to the invention is as follows.

The profiled elements 5 that are grouped in the various channels 2 in a per se known manner, by means of the actuation of the rollers 8, can be moved along the movement path, in the direction 10, toward the exit opening, or in the direction 11, toward the holding compartment 17.

It should be noted that although in the device according to the invention, differently from known types of device, there are rollers 8 that serve two or more channels 2 arranged side by side, the movement of the profiled elements in these channels 2 can occur independently for each channel.

In the channels 2 for which movement of the profiled elements 5 is not intended, before the rollers 8 are actuated in order to move the profiled elements 5 arranged in the channels 2 served by said rollers 8, the curved panels 12 are in fact actuated and, by lifting the profiled elements 5, prevent them from resting on the rollers 8, which in this manner, even if actuated, cannot produce any movement effect on the profiled elements 5.

If required, the rollers 8 can be actuated so as to place a longitudinal end of the profiled elements 5 in the holding compartment 17, so as to allow an operator to access said compartment 17 in order to perform tie fitting operations, apply identification labels, markings or other operations on a same set of profiled elements 5. The presence of the protective cover 18, whose opening prevents or interrupts the actuation of the rollers 8, allows the operator to work in conditions of absolute safety.

After the closure of the protective cover 18, the profiled elements 5, through the actuation of the rollers 8, can be moved again toward the exit opening of the corresponding channel 2.

In practice it has been found that the device according to the invention fully achieves the intended aim, since by having movement means that are shared by multiple channels yet allow the movement of the profiled elements arranged in one of these channels autonomously with respect to the other channels, it requires, for an equal number of channels, a smaller number of motors than known kinds of device.

This fact allows a reduction in production costs or, for equal costs and dimensions, the possibility of a larger number of grouping and movement channels.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for grouping and moving metallic profiled elements (5) particularly for steel rods for producing reinforcement frames for concrete or the like, comprising at least two grouping and movement channels (2), which are elongated longitudinally, are arranged horizontally or inclined with respect to the horizontal, and are flanked and delimited by lateral containment elements (3) and by a bottom (4) that forms a support for the profiled elements to be grouped and moved, means (6) being provided in said channels for moving the profiled elements (5) along a movement direction that is substantially parallel to the longitudinal extension of said channels, **characterized in that** said movement means (6) are common to at least two of said channels (2), overriding means (7) being provided for at least one of said at least two channels (2), said means (7) being activatable on command in order to eliminate the effect of said movement means (6) on the profiled elements (5) arranged in said at least one of said channels (2).

2. The device according to claim 1, **characterized in that** said movement means (6) are adapted to produce the advancement of the profiled elements (5) along said movement path in one direction (10) and/or in the opposite direction (11).

3. The device according to claims 1 and 2, **characterized in that** said channels (2) have an exit opening at one of their longitudinal ends.

4. The device according to one or more of the preceding claims, **characterized in that** said channels (2) have, at one of their longitudinal ends, an opening (16) that is connected to a holding compartment (17) that can be accessed from the outside by an operator, said movement means (6) being actuatable in order to move said profiled elements (5) so that one of their longitudinal ends lies in said holding compartment (17).

5. The device according to one or more of the preceding claims, **characterized in that** said holding compartment (17) is arranged at the longitudinal end of said channels (2) that lies opposite said exit opening (16).

6. The device according to one or more of the preceding claims, **characterized in that** said compartment (17) is closed in an upward region by a protective covering (18), which can be opened to access said compartment, safety means being provided which are adapted to allow the actuation of said movement means (6) only when said protective cover (18) in the closure position.

7. The device according to one or more of the preceding claims, **characterized in that** said movement means (6) comprise rollers (8) arranged so that their axes lie transversely to the longitudinal extension of said channels (2) and are arranged on the bottom of (4) of said channels (2), said rollers being actuatable with a rotary motion about their respective axes in order to move, in one direction (10) and or in the opposite direction (11), said profiled elements (5) along said movement direction in the channels (2) that do not have said overriding means (7) and/or in which said overriding means (7) desactivated.

8. The device according to one or more of the preceding claims, **characterized in that** said overriding means (7) comprise lifting means for the profiled elements (5) arranged in at least one of said channels (2), said lifting means being activatable in order to prevent the resting of said profiled elements on the rollers (8) arranged on the bottom (4) of said at least one channel (2) and being deactivatable in order to allow the resting of said profiled elements (5) on the rollers (8) arranged on the bottom (4) of said at least one channel (2).

9. The device according to one or more of the preceding claims, **characterized in that** said overriding means (7) comprise lifting means, which are arranged in multiple channels (2) served by the same rollers (8) as the movement means (6), said lifting means being actuatable, for each one of the channels (2) at which they are arranged, independently of the lifting means arranged at the other channels (2).

10. The device according to one or more of the preceding claims, **characterized in that** said lifting means comprise curved panels (12), which are interposed between said rollers (8) along said movement direction (10), (11) and are movable on command from a deactivation position, in which they are arranged below the supporting surface for the profiled elements (5) that is formed by said rollers (8) in order to allow the profiled elements (5) to rest on said rollers (8), to an activation position, in which at least one of their portions protrudes upward from said surface in order to prevent the profiled elements (5) from resting on said rollers (8), and vice versa.

11. The device according to one or more of the preceding claims, **characterized in that** the curved panels (12) arranged in a same channel (2) of said channels (2) are connected to a same actuator (13), which can be actuated for their passage from said deactivation position to said activation position, and vice versa.

12. The device according to one or more of the preceding claims, **characterized in that** each one of said channels (2) is delimited in an upward region by a closure element (20), which can be opened individually in order to allow the profiled elements (5) to enter the corresponding channel (2).

## Patentansprüche

1. Vorrichtung zum Gruppieren und Transportieren von Metallprofilen (5), insbesondere für Stahlstangen zur Herstellung von Bewehrungsgerippen für Beton oder dergleichen, mit mindestens zwei Gruppier- und Transportkanälen (2), die in Längsrichtung langgestreckt sind, horizontal angeordnet oder in Bezug auf die Horizontale geneigt sind und von seitlichen Einschlusselementen (3) und von einem Boden (4), der eine Stütze für die zu gruppierenden und transportierenden Profile bildet, flankiert und begrenzt sind, wobei in den Kanälen Einrichtungen (6) zum Transportieren der Profile (5) entlang einer Transportrichtung vorgesehen sind, die im wesentlichen parallel zur Längsausdehnung der Kanäle ist, **dadurch gekennzeichnet, dass** die Transporteinrichtungen (6) mindestens zweien der Kanäle (2) gemeinsam sind, wobei für mindestens einen der mindestens zwei Kanäle (2) Aufhebeeinrichtungen (7) vorgesehen sind, welche Einrichtungen (7) auf Befehl aktivierbar sind, um die Wirkung der Transporteinrichtungen (6) auf die in dem mindestens einen der Kanäle (2) angeordneten Profile (5) auszuschalten.

2. Vorrichtung nach Anspruch 1, **dadurch gekennzeichnet, dass** die Transporteinrichtungen (6) dafür eingerichtet sind, das Vorrücken der Profile (5) entlang des Transportweges in einer Richtung (10) oder in der entgegengesetzten Richtung (11) zu erzeugen.

3. Vorrichtung nach Anspruch 1 oder 2, **dadurch gekennzeichnet, dass** die Kanäle (2) an einem ihrer Längsenden eine Ausgangsöffnung haben.

4. Vorrichtung nach einem oder mehreren der vorhergehenden Ansprüche, **dadurch gekennzeichnet, dass** die Kanäle (2) an einem ihrer Längsenden eine Öffnung (16) haben, die mit einem Speicherfach (17) verbunden ist, auf das ein Bediener von außen zugreifen kann, wobei die Transporteinrichtungen (6) antreibbar sind, um die Profile (5) so zu transportieren, dass eines ihrer Längsenden in dem Speicherfach (17) liegt.

5. Vorrichtung nach einem oder mehreren der vorhergehenden Ansprüche, **dadurch gekennzeichnet, dass** das Speicherfach (17) an dem dem Ausgangsende (16) entgegengesetzt liegenden Längsende der Kanäle (2) angeordnet ist.

6. Vorrichtung nach einem oder mehreren der vorhergehenden Ansprüche, **dadurch gekennzeichnet, dass** das Fach (17) in einem Bereich nach oben hin durch eine Schutzabdeckung (18) verschlossen ist, die für Zugang zu dem Fach geöffnet werden kann, wobei Sicherheitseinrichtungen vorgesehen sind, die dafür eingerichtet sind, den Antrieb der Transporteinrichtungen (6) nur dann zu erlauben, wenn die Schutzabdeckung (18) in der Schließposition ist.

7. Vorrichtung nach einem oder mehreren der vorhergehenden Ansprüche, **dadurch gekennzeichnet, dass** die Transporteinrichtungen (6) Rollen (8) aufweisen, die so angeordnet sind, dass ihre Achsen quer zur Längsausdehnung der Kanäle (2) liegen, und am Boden (4) der Kanäle (2) angeordnet sind, wobei die Rollen mit einer Drehbewegung um ihre jeweiligen Achsen antreibbar sind, um die Profile (5) in einer Richtung (10) und/oder in der entgegengesetzten Richtung (11) entlang der Transportrichtung in denjenigen Kanälen (2) zu transportieren, die keine Aufhebeeinrichtungen (7) aufweisen und/oder in denen die Aufhebeeinrichtungen (7) deaktiviert sind.

8. Vorrichtung nach einem oder mehreren der vorhergehenden Ansprüche, **dadurch gekennzeichnet, dass** die Aufhebeeinrichtungen (7) Hebeeinrichtungen für die in mindestens einem der Kanäle (2) angeordneten Profile (5) aufweisen, wobei die Hebeeinrichtungen aktivierbar sind, um das Ruhen der Profile auf den Rollen (8) zu verhindern, die am Boden (4) des mindestens einen Kanals (2) angeordnet sind, und deaktivierbar sind, um das Ruhen der Profile (5) auf den Rollen (8) zu erlauben, die am Boden (4) des mindestens einen Kanals (2) angeordnet sind.

9. Vorrichtung nach einem oder mehreren der vorhergehenden Ansprüche, **dadurch gekennzeichnet, dass** die Aufhebeeinrichtungen (7) Hebeeinrichtungen aufweisen, welche in mehreren Kanälen (2) angeordnet sind, die von denselben Rollen (8) als die Transporteinrichtungen (6) bedient werden, wobei die Hebeeinrichtungen für einen jeden Kanal (2), in dem sie angeordnet sind, unabhängig von den in den anderen Kanälen (2) angeordneten Hebeeinrichtungen antreibbar sind.

10. Vorrichtung nach einem oder mehreren der vorhergehenden Ansprüche, **dadurch gekennzeichnet, dass** die Hebeeinrichtungen gebogene Bleche (12) aufweisen, die entlang der Transportrichtung (10, 11) zwischen die Rollen (8) gelegt sind und auf Befehl von einer Deaktivierungsposition, in der sie unterhalb der durch die Rollen (8) gebildeten Stützfläche für die Profile (5) angeordnet sind, damit die Profile (5) auf den Rollen (8) ruhen können, in eine Aktivierungsposition, in der mindestens einer ihrer Teile von der Fläche nach oben vorsteht, damit die Profile (5) nicht auf den Rollen (8) ruhen können, und umgekehrt beweglich sind.

11. Vorrichtung nach einem oder mehreren der vorhergehenden Ansprüche, **dadurch gekennzeichnet, dass** die gebogenen Bleche (12) im selben Kanal (2) der Kanäle (2) mit demselben Aktuator (13) verbunden sind, der für ihren Übergang von der Deaktivierungsposition in die Aktivierungsposition und umgekehrt angetrieben werden kann.

12. Vorrichtung nach einem oder mehreren der vorhergehenden Ansprüche, **dadurch gekennzeichnet, dass** ein jeder Kanal (2) in einem Bereich nach oben hin durch ein Verschlusselement (20) begrenzt ist, das individuell geöffnet werden kann, damit die Profile (5) in den entsprechenden Kanal (2) eintreten können.

## Revendications

1. Dispositif pour grouper et déplacer des éléments profilés métalliques (5), en particulier des barres d'acier destinées à produire des armatures de renforcement pour béton ou analogue, comprenant au moins deux canaux de groupement et de déplacement (2) qui sont allongés longitudinalement, sont disposés horizontalement ou inclinés par rapport à l'horizontale, et sont bordés et délimités par des éléments de contention latéraux (3) et par un fond (4) qui forme un support pour les éléments profilés qu'il s'agit de grouper et de déplacer, des moyens (6) étant prévus dans lesdits canaux pour déplacer les éléments profilés (5) le long d'une direction de déplacement qui est sensiblement parallèle à l'extension longitudinale desdits canaux, **caractérisé en ce que** lesdits moyens de déplacement (6) sont communs à au moins deux desdits canaux (2), des moyens d'interdiction (7) étant prévus pour au moins un desdits au moins deux canaux (2), lesdits moyens (7) pouvant être activés sur ordre afin d'éliminer l'effet desdits moyens de déplacement (6) sur les éléments profilés (5) agencés dans ledit au moins un desdits canaux (2).

2. Dispositif selon la revendication 1, **caractérisé en ce que** lesdits moyens de déplacement (6) sont adaptés pour provoquer l'avancement des éléments profilés (5) le long dudit trajet de déplacement dans un sens (10) et/ou dans le sens opposé (11).

3. Dispositif selon les revendications 1 et 2, **caractérisé en ce que** lesdits canaux (2) ont une ouverture de sortie à une de leurs extrémités longitudinales.

4. Dispositif selon une ou plusieurs des revendications précédentes, **caractérisé en ce que** lesdits canaux (2) ont, à une de leurs extrémités longitudinales, une ouverture (16) qui est reliée à un compartiment de retenue (17) auquel un opérateur peut accéder de l'extérieur, lesdits moyens de déplacement (6) pouvant être actionnés afin de déplacer lesdits éléments profilés (5) de moyen qu'une de leurs extrémités longitudinales se trouve dans ledit compartiment de retenue (17).

5. Dispositif selon une ou plusieurs des revendications précédentes, **caractérisé en ce que** ledit compartiment de retenue (17) est agencé à l'extrémité longitudinale desdits canaux (2) qui se trouve à l'opposé de ladite ouverture de sortie (16).

6. Dispositif selon une ou plusieurs des revendications précédentes, **caractérisé en ce que** ledit compartiment (17) est fermé dans une région supérieure par un recouvrement de protection (18) qui peut s'ouvrir pour donner accès audit compartiment, alors qu'il est prévu des moyens de sécurité qui sont adaptés pour permettre l'actionnement desdits moyens de déplacement (6) uniquement lorsque ledit couvercle de protection (18) est dans la position fermée.

7. Dispositif selon une ou plusieurs des revendications précédentes, **caractérisé en ce que** lesdits moyens de déplacement (6) comprennent des rouleaux (8) agencés de manière que leurs axes s'étendent transversalement à l'extension longitudinale desdits canaux (2) et soient agencés sur le fond (4) desdits canaux (2), lesdits rouleaux pouvant être actionnés avec un mouvement rotatif autour de leurs axes respectifs afin de déplacer lesdits éléments profilés (5) dans un sens (10) et/ou dans le sens opposé (11), selon ladite direction de déplacement, dans les canaux (2) qui ne possèdent pas lesdits moyens d'interdiction (7) et/ou dans lesquels lesdits moyens d'interdiction (7) sont désactivés.

8. Dispositif selon une ou plusieurs des revendications précédentes, **caractérisé en ce que** lesdits moyens d'interdiction (7) comprennent des moyens élévateurs pour les éléments profilés (5) agencés dans au moins un desdits canaux (2), lesdits moyens élévateurs pouvant être activés pour empêcher lesdits éléments profilés de reposer sur les rouleaux (8) agencés sur le fond (4) dudit au moins un canal (2) et pouvant être désactivés pour permettre auxdits éléments profilés (5) de reposer sur lesdits rouleaux (8) agencés sur le fond (4) dudit au moins un canal (2).

9. Dispositif selon une ou plusieurs des revendications précédentes, **caractérisé en ce que** lesdits moyens d'interdiction (7) comprennent des moyens élévateurs qui sont agencés dans des canaux multiples (2) desservis par les mêmes rouleaux (8) que ceux des moyens de déplacement (6), lesdits moyens élévateurs pouvant être actionnés, pour chacun des canaux (2) dans lesquels ils sont agencés, indépendamment des moyens élévateurs agencés dans les autres canaux (2).

10. Dispositif selon une ou plusieurs des revendications précédentes, **caractérisé en ce que** lesdits moyens élévateurs comprennent des panneaux recourbés (12) qui sont interposés entre lesdits rouleaux (8) selon ladite direction de déplacement (10), (11) et peuvent être déplacés sur ordre à partir d'une position de désactivation, dans laquelle ils sont disposés au-dessous de ladite surface de support prévue pour les éléments profilés (5) qui est formée par lesdits rouleaux (8) pour permettre aux éléments profilés (5) de reposer sur lesdits rouleaux (8), vers une position d'activation dans laquelle au moins une de leurs parties fait saillie au-dessus de ladite surface pour empêcher les éléments profilés (5) de reposer sur lesdits rouleaux (8) et inversement.

11. Dispositif selon une ou plusieurs des revendications précédentes, **caractérisé en ce que** les panneaux recourbés (12) agencés dans un même canal (2) desdits canaux (2) sont reliés à un même actionneur (13) qui peut être actionné pour les faire passer de ladite position de désactivation à ladite position d'activation et inversement.

12. Dispositif selon une ou plusieurs des revendications précédentes, **caractérisé en ce que** chacun desdits canaux (2) est délimité, dans une région supérieure, par un élément de fermeture (20) qui peut être ouvert individuellement pour permettre aux éléments profilés (5) d'entrer dans le canal (2) correspondant
